Europäisches Patentamt

European Patent Office

Office européen des brevets

(11) Numéro de publication : **0 331 581 B1**

(12) # FASCICULE DE BREVET EUROPEEN

(45) Date de publication du fascicule du brevet :
13.11.91 Bulletin 91/46

(51) Int. Cl.⁵ : **G01C 19/64**

(21) Numéro de dépôt : **89400578.4**

(22) Date de dépôt : **02.03.89**

(54) **Miroir piézoélectrique pour gyromètre à laser.**

(30) Priorité : **04.03.88 FR 8802750**

(43) Date de publication de la demande :
**06.09.89 Bulletin 89/36**

(45) Mention de la délivrance du brevet :
**13.11.91 Bulletin 91/46**

(84) Etats contractants désignés :
**BE CH DE GB IT LI LU NL**

(56) Documents cités :
**WO-A-86/01887**
**FR-A- 2 510 336**
**US-A- 4 160 184**
**US-A- 4 383 763**

(73) Titulaire : **SEXTANT Avionique**
**5/7 rue Jeanne Braconnier Parc Tertiaire**
**F-92366 Meudon la Forêt Cedex (FR)**

(72) Inventeur : **Legland, Roger**
**33, rue Augustin Neveu**
**F-86100 Chatellerault (FR)**

(74) Mandataire : **Marquer, Francis et al**
**Cabinet Moutard 35, Avenue Victor Hugo**
**F-78960 Voisins le Bretonneux (FR)**

Jouve, 18, rue Saint-Denis, 75001 PARIS

## Description

La présente invention concerne un miroir à déplacement piézoélectrique pour gyromètre à laser. Elle s'applique à tous les gyromètres à laser, triangulaires ou carrés, monoaxes ou multiaxes.

Le principe de fonctionnement des gyromètres à laser est maintenant bien connu et l'homme de l'art n'aura aucune peine à comprendre les explications qui vont suivre.

Les gyromètres à laser, appelés dans ce qui va suivre gyrolasers, comportent généralement :

— un bloc optique, en matériau isolant et à faible coefficient de dilatation, dans lequel est aménagé un parcours optique, le plus souvent triangulaire ou carré, délimité par trois ou quatre miroirs, l'ensemble constituant une cavité optique résonnante ;

— un milieu amplificateur générant, dans la cavité optique, deux ondes lumineuses tournant en sens inverses l'une de l'autre, les interférences entre ces deux ondes permettant la mesure de la rotation du gyromètre autour d'un axe perpendiculaire au plan du parcours optique ;

— un dispositif de mélange des ondes lumineuses, pour créer des franges d'interférences sur un ensemble de cellules photoélectriques, le défilement desdites franges représentant la rotation angulaire du gyrolaser et étant transformé par lesdites cellules photoélectriques en signaux électriques utilisables ;

— éventuellement, des moyens d'activation mécanique permettant de faire osciller le bloc optique par rapport à son support pour éviter les effets bien connus de blocage entre les deux ondes lumineuses ;

— des moyens d'asservissement de la longueur de cavité agencés de telle sorte que la fréquence de résonnance de la cavité optique corresponde à celle pour laquelle le gain du milieu amplificateur de lumière est maximum.

Les moyens d'asservissement de la longueur de cavité comprennent généralement eux-mêmes un ou plusieurs miroirs mobiles, dits miroirs piézoélectriques, des circuits électroniques et une ou plusieurs cellules photoélectriques qui mesurent l'intensité des ondes lumineuses du gyrolaser.

Les miroirs piézoélectriques doivent présenter des caractéristiques souvent inconciliables.

Ils doivent notamment :

— être aussi légers et indéformables que possible pour être insensibles aux vibrations ;

— être insensibles aux contraintes thermiques ;

— être montés sans jeu entre les pièces qui les composent, ce qui nécessite de leur imposer des contraintes initiales ou de réaliser des ensembles entièrement collés ;

— être exempts de tout risque de fluage, notamment des colles, pour que, lors du vieillissement, la longueur de cavité ne soit pas modifiée ;

— avoir une dynamique suffisante pour compenser les variations de longueur de la cavité optique dans tout le domaine de température où le gyrolaser est appelé à fonctionner ;

— pouvoir être fixés par adhérences moléculaires.

En outre, la position angulaire du miroir doit rester parfaitement stable, et ceci, quelles que soient les conditions d'environnement.

Pour certaines applications, lorsque par exemple tous les miroirs d'un gyrolaser doivent être mobiles, il est nécessaire que l'un au moins de ces miroirs puisse laisser passer une partie de la lumière des ondes lumineuses pour créer les franges d'interférences et commander les circuits électroniques d'asservissement de la cavité.

La solution la plus souvent utilisée pour réaliser le miroir piézoélectrique, consiste à placer un ensemble de couches réfléchissantes à l'extrémité d'un petit cylindre plein suspendu entre deux membranes parallèles entre elles et perpendiculaires à l'axe dudit cylindre, à fixer les membranes à l'intérieur d'un cylindre creux, et à pousser ou tirer à l'autre extrémité du petit cylindre à l'aide d'un bilame piézoélectrique fixé sur le cylindre creux.

De nombreuses variantes de cette solution ont également été proposées notamment par les brevets US 4383763 et FR 2510336 et la demande de brevet international WO 8601887, mais aucune ne satisfait pleinement aux conditions exposées ci-dessus, soit parce que leur sensibilité thermique est trop grande, soit parce que, si leur dynamique est suffisante, le fluage dans le temps des pièces et des collages est trop important, soit encore parce qu'elles ne permettent pas de sortir les deux ondes lumineuses.

La présente invention apporte une solution qui permet d'assurer la dynamique nécessaire sans risque de fluage des pièces ou des collages, qui est insensible aux conditions d'environnement et dont une variante préférée autorise la sortie des ondes lumineuses.

L'invention concerne plus particulièrement un miroir mobile piézoélectrique pour laser ou pour gyromètre à laser du type comprenant :

— un bloc optique comportant au moins une cavité optique, à l'intérieur de laquelle sont engendrées, grâce à un milieu amplificateur, une ou plusieurs ondes laser ;

— au moins un miroir mobile actionné par un moteur piézoélectrique faisant intervenir un disque mince d'actionnement sur les deux faces opposées duquel sont fixés coaxialement deux éléments piézoélectriques de forme circulaire.

Selon l'invention, ce miroir est caractérisé en ce que les susdits éléments piézoélectriques présentent la forme de couronne, et en ce que l'un des deux diamètres au moins de l'un desdits éléments piézoélectriques est différent du diamètre correspondant de l'autre élément piézoélectrique, de manière à engendrer, sous l'effet d'une variation de température, une déformation du disque entraînant un déplacement du miroir mobile tendant à corriger les variations dimensionnelles de la cavité optique.

Des modes de réalisation de l'invention seront décrits ci-après, à titre d'exemples non limitatifs, avec référence aux dessins annexés dans lesquels :

La figure 1 est une vue de dessus d'un gyrolaser auquel s'applique l'invention ;

La figure 2 est une vue en coupe axiale d'un miroir mobile piézoélectrique selon l'art antérieur ;

La figure 3 est une vue en coupe axiale d'un premier mode de réalisation du miroir mobile piézoélectrique selon l'invention ;

La figure 4 est une vue en coupe partielle du miroir mobile de la figure 3 ;

La figure 5 est une vue axiale du moteur piézoélectrique du miroir mobile piézoélectrique de la figure 3 ;

La figure 6 est une vue en coupe d'un second mode de réalisation d'un miroir mobile piézoélectrique selon l'invention ;

La figure 7 est une vue en coupe d'un troisième mode de réalisation préféré du miroir mobile piézoélectrique selon l'invention ;

La figure 8 est une vue axiale d'un moteur piézoélectrique adaptable au miroir mobile piézoélectrique de la figure 7 ; et

La figure 9 illustre un mode d'utilisation des ondes lumineuses issues du miroir mobile piézoélectrique de la figure 7.

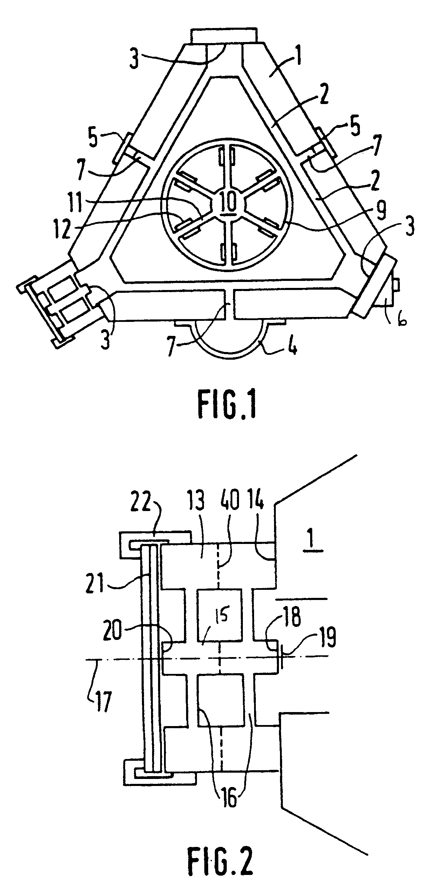

Comme précédemment mentionné, et ainsi que le montre la figure 1, un gyrolaser comprend notamment :

— un bloc optique 1, réalisé dans un matériau isolant et étanche à l'hélium, généralement une céramique vitrifiée du genre "zérodur", dans lequel sont percés des conduits 2, fermés par des miroirs 3 dont un au moins est mobile et qui forment avec lesdits conduits 2 un parcours optique, triangulaire dans le cas de la figure 1, mais qui peut prendre toute autre forme, un même bloc optique pouvant comporter plusieurs parcours optiques ; un tel parcours optique forme une cavité optique résonnante ;

— des miroirs 3 dont l'un au moins est mobile dans une direction perpendiculaire à son plan ; ces miroirs sont généralement composés d'un substrat poli sur lequel est déposé un empilement de couches multidiélectriques pour constituer la partie réfléchissante du miroir lui-même ;

— un système de sortie des informations placé sur l'un des miroirs 3 et comportant au moins un prisme de mélange 6 et un ensemble de cellules photoélectriques, ledit miroir étant légèrement transmettant, c'est-à-dire pouvant laisser passer une partie de la lumière qu'il doit réfléchir ;

— une ou deux cathodes 4 fixées sur le bloc optique 1 ;

— une ou deux anodes 5 également fixées sur le bloc optique 1.

Ces cathodes et anodes constituent les électrodes du gyrolaser et sont reliées aux conduits 2 par des conduits de raccordement 7.

Le bloc optique 1 est rempli d'un mélange gazeux généralement à base d'hélium et de néon. Un courant électrique passant entre les électrodes excite ce mélange gazeux et crée un plasma dans les conduits de raccordement 7 et dans les conduits 2, plasma qui, en amplifiant la lumière, génère par effet laser, deux ondes lumineuses tournant en sens inverse dans la cavité optique.

Ce bloc optique 1 est monté oscillant autour d'un axe grâce à une roue d'activation. Celle-ci est composée d'une couronne extérieure 9, d'un moyeu central 10 et de lames élastiques 11 sur lesquelles sont collées des céramiques piézoélectriques 12.

La figure 2 montre, en coupe axiale, un miroir mobile piézoélectrique selon l'art antérieur, qui comprend généralement :

— une partie fixe extérieure 13 généralement cylindrique, creuse et dont une extrémité 14 est fixée le plus souvent par adhérence moléculaire au bloc optique 1 ;

— une partie mobile intérieure 15 elle aussi généralement cylindrique, ayant un axe 17, maintenue dans la partie fixe 13 par une ou plusieurs membranes fines 16 qui lui permettent de se déplacer, suivant son axe 17, de quelques microns ; cette partie mobile porte, à l'une de ses extrémités 18, située du même côté que l'extrémité 14 de la partie extérieure 13, le plus souvent dans le même plan que ladite extrémité 14, une partie réfléchissante 19 constituant le miroir proprement dit et généralement réalisée sous forme d'un empilement de couches dites multidiélectriques ;

— un moteur piézoélectrique qui vient pousser ou tirer sur la partie centrale 15, généralement à l'autre extrémité 20 de ladite partie centrale 15 ; l'une des solutions couramment adoptée pour réaliser ce moteur piézoélectrique consiste à utiliser un bilame piézoélectrique 21 fixé à la partie extérieure 13 par un ensemble de pièces le plus souvent métalliques 22 et généralement collées sur ladite partie extérieure 13, ces pièces métalliques 22 assurant une contrainte initiale au bilame pour éviter les jeux, et imposant donc des contraintes à l'ensemble des pièces.

Ces pièces métalliques 22, même si elles sont réalisées dans un matériau à faible coefficient de dilatation, créent, lors des variations de température, des variations de contraintes dans l'ensemble des pièces qui sont une cause d'instabilité, aussi bien pour la longueur de la cavité, que pour la position angulaire du miroir.

Pour obtenir une dynamique suffisante, c'est-à-dire un déplacement suffisamment grand du miroir 19, le bilame piézoélectrique 21 est généralement du plus grand diamètre possible, et ses dilatations en température sont alors également une cause d'instabilité très importante. Ces dilatations peuvent entraîner des fluages dans le bilame lui-même et dans les collages des pièces de fixation 22. Après fluage, le serrage des pièces peut devenir insuffisant, le bilame peut se déplacer, l'ensemble des contraintes peut changer et tout ceci est très préjudiciable aux performances des gyrolasers.

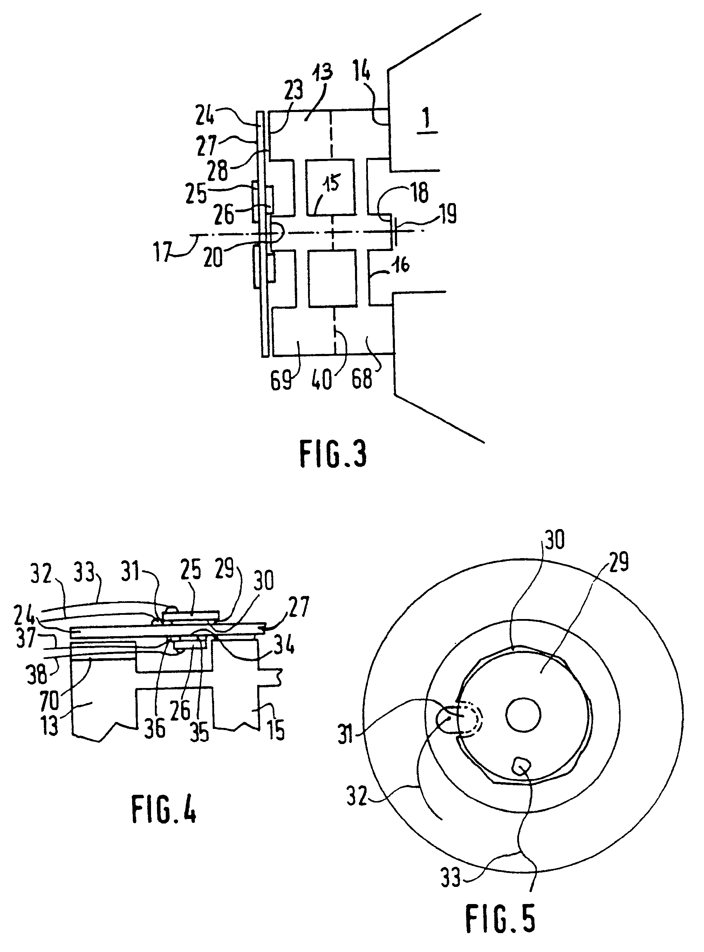

La figure 3 illustre un premier mode de réalisation d'un miroir mobile piézoélectrique selon l'invention et dont le principe consiste à faire un moteur piézoélectrique dont la dynamique piézoélectrique soit réduite, mais dont la sensibilité thermique soit telle qu'elle compense au moins partiellement les variations de dimensions de la cavité optique en température.

Pour arriver à ce résultat, un miroir mobile piézoélectrique selon l'invention comprend :

— une partie fixe extérieure 13, de préférence cylindrique creuse, ayant un axe 17 et deux extrémités 14 et 23 planes, sensiblement parallèles et perpendiculaires à l'axe 17, l'extrémité 14 servant à la fixation sur le bloc optique 1 ;

— une partie mobile interne 15, de préférence cylindrique, de même axe 17 que la partie extérieure 13, et dont une extrémité 18, sensiblement coplanaire avec l'extrémité 14 susdécrite, porte un ensemble de couches multidiélectriques formant miroir 19, l'autre extrémité 20 étant également avantageusement plane ;

— au moins une membrane 16 et, de préférence, deux, parallèles entre elles, perpendiculaires à l'axe 17, rendant solidaire la partie mobile 15 de la partie fixe 13, et dont la raideur est suffisamment faible pour permettre un léger déplacement de la partie mobile 15 selon l'axe 17 ; la position desdites membranes 16 étant choisie de préférence pour équilibrer les forces que la partie interne 15 leur applique lorsque l'ensemble est soumis à des accélérations perpendiculaires à l'axe 17 ;

— une pièce 24 avantageusement réalisée en forme de lame mince circulaire et dans le même matériau que celui utilisé pour la partie extérieure 13, et ayant deux faces 27 et 28 ;

— deux éléments piézoélectriques, de préférence des céramiques piézoélectriques 25 et 26, en forme de couronnes, collées centrées sur les faces 27 et 28 de la pièce 24, la céramique 25 étant collée sur la face 27 et étant plus large que la céramique 26 collée, elle, sur la face 28 de ladite pièce 24.

L'ensemble comprenant la partie externe 13, la partie interne 15 et les membranes 16, peut être réalisé sous forme de deux pièces 68 et 69 sensiblement identiques comprenant chacune la moitié de chacune desdites parties interne 15 et externe 13 et une membrane 16, les deux pièces 68 et 69 étant réunies au montage par une adhérence moléculaire 40 ou par tout autre procédé adéquat.

Les faces 20 et 23 des parties interne 15 et externe 13, sont usinées de façon à être situées dans un même plan si la pièce 24 a été réalisée sous forme de disque plan.

Ladite pièce 24 est collée, par sa face 28, en son centre sur l'extrémité 20 de la partie interne 15 et, à sa périphérie, sur l'extrémité 23 de la partie extérieure 13, de sorte que la céramique 25, la plus large, soit située à l'extérieur de l'ensemble.

Le diamètre interne de la couronne de la céramique 26 est préférentiellement choisi très légèrement supérieur à celui de l'extrémité 20 de la partie interne 15.

Le diamètre interne de la couronne de la céramique 24 peut être choisi de préférence plus réduit que celui de l'extrémité 20 de la partie interne 15, afin d'augmenter la sensibilité piézoélectrique du système, et de lui donner la sensibilité thermique recherchée.

Les céramiques piézoélectriques 24 et 25 sont métallisées sur chacune de leurs faces, et un collage particulier est réalisé pour assurer, d'une part, une bonne transmission des contraintes mécaniques entre lesdites céramiques et la pièce 23 et, d'autre part, une bonne liaison électrique vers lesdites faces métallisées.

Pour ce faire, deux colles sont utilisées ainsi que le représentent les figures 4 et 5.

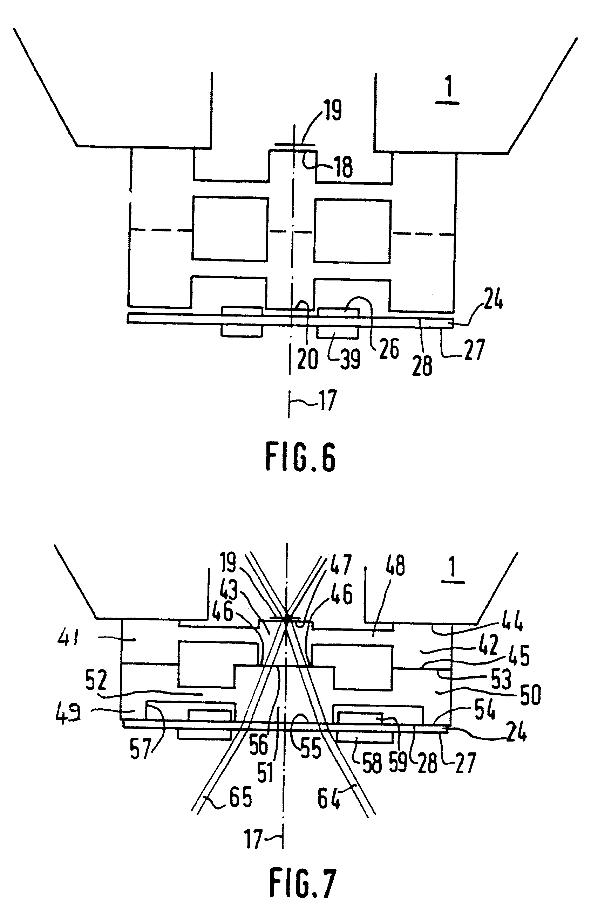

La figure 4 est une vue partielle agrandie de la figure 3, et la figure 6 est une vue partielle également agrandie du miroir mobile piézoélectrique selon l'invention, en vue extérieure selon l'axe 17.

Un film de colle 29, présentant une très bonne tenue mécanique dans tout le domaine de température, est appliqué sur presque toute la partie 30 de la face 27 de la pièce 24 qui reçoit la céramique 25 à fixer et qui est recouverte par ladite céramique.

Un point 31 de colle conductrice, ou éventuellement deux placés symétriquement, est appliqué à la périphérie de la partie 30 susdite et déborde à l'extérieur de ladite partie 30 de façon que ledit point de colle 31 soit accessible une fois la céramique 25 collée.

Après séchage ou polymérisation des colles, deux fils conducteurs 32 et 33 sont fixés, l'un 32, par collage à la colle conductrice, sur le ou l'un des points de colle conductrice 31, l'autre 33, par soudure sur la métallisation ou éventuellement par collage à la colle conductrice.

La céramique 24 est collée de la même manière et reliée électriquement par deux fils conducteurs 37 et 38 qui sortent vers l'extérieur du miroir mobile piézoélectrique par un trou 70 réalisé dans la partie externe 13 dudit miroir mobile.

Ainsi décrit, le miroir mobile piézoélectrique de la figure 3 fonctionne comme suit :

Sous l'effet d'une augmentation de température du gyrolaser, le bloc optique 1, dont le coefficient de dilatation est généralement négatif, se contracte et la longueur de la cavité optique a tendance à diminuer. Dans le même temps, les deux céramiques 25 et 26 tendent à se dilater. La céramique 25 placée à l'extérieur, étant plus large, impose à la pièce 24 une contrainte supérieure à celle apportée par la céramique 26.

Par effet bilame, et ainsi que l'homme de l'art le comprendra aisément, la différence de contraintes tend à déformer la pièce 24 en lui donnant une convexité tournée vers l'extérieur, entraînant de ce fait un déplacement de la partie interne 15 et du miroir 19 vers l'extérieur de la cavité optique. Ceci aura pour résultat d'augmenter la longueur de ladite cavité optique et de compenser la diminution susdécrite.

Du fait de leur faible diamètre et de leur faible largeur, les céramiques piézoélectriques n'apportent pas de contraintes mécaniques trop importantes à la pièce 24 et celle-ci ne risque pas de rupture.

Du fait de la compensation thermique ainsi réalisée, la dynamique piézoélectrique peut être réduite puisqu'elle n'a plus à corriger la totalité des variations thermiques de la longueur de la cavité optique. Les céramiques de faible largeur utilisées deviennent donc tout à fait suffisantes pour corriger les variations résiduelles des dimensions de la cavité optique.

La figure 6 illustre un deuxième mode de réalisation du miroir mobile piézoélectrique selon l'invention, dont la constitution est très voisine de celle susdécrite et qui s'en différencie en ce que la céramique 25, utilisée précédemment et plus large que la céramique 26, est remplacée par une céramique 39 sensiblement de même largeur que la céramique 26, mais plus épaisse que celle-ci. Dans ce cas, la compensation thermique est obtenue par la différence d'épaisseur entre les deux céramiques 26 et 39.

Il va de soi que les différents diamètres et épaisseurs des céramiques et de la pièce 24 peuvent être combinés de nombreuses manières pour optimiser la compensation thermique et la sensibilité piézoélectrique sans sortir du cadre de l'invention.

De même, de très nombreux autres moyens peuvent être utilisés pour réaliser une liaison souple entre une partie interne mobile portant un miroir et une partie externe fixée au bloc optique 1.

La figure 7 illustre, en vue en coupe axiale, un troisième mode préféré de réalisation de l'invention qui permet de faire sortir la lumière des deux ondes lumineuses sans perdre aucun des avantages des modes de réalisation déjà décrits.

L'organisation générale de ce troisième mode de réalisation est analogue à celles décrites précédemment, mais la partie interne mobile, la partie externe fixe et les deux membranes sont réalisées sous forme de deux pièces distinctes réunies de préférence par adhérence moléculaire.

Une première pièce 41 sensiblement de révolution, réalisée de préférence dans le même matériau que celui du bloc optique 1, comprend :

— une partie extérieure 42 de préférence cylindrique dont une face 44 est fixée au bloc optique et dont l'autre face 45 est de préférence plane et polie,

— une partie interne 43 également de préférence cylindrique dont une face 47, sensiblement coplanaire de la face 44, reçoit un empilement de couches multidiélectriques 19 formant miroir, et dont l'autre face 56 est coplanaire de la face 45 et également plane et polie,

— une membrane 48 reliant les parties interne 43 et externe 42.

Une deuxième pièce 49, également sensiblement de révolution et également réalisée de préférence dans le même matériau que celui du bloc 1, comprend :

— une partie extérieure 50 de préférence cylindrique, ayant une face 53, sensiblement de même dimension que la face 45 de la pièce 42 et fixée à ladite face 45 par exemple par adhérence moléculaire, et une face 54 moins large que la face 53 ;

— une partie interne 51 cylindrique, de plus grand diamètre que celui de la partie interne 43 de la pièce 41, ayant une face 56 fixée à la face 46 de la pièce 42, par exemple par adhérence moléculaire, et une face 55 de préférence coplanaire de la face 54 ;

— une membrane 52 reliant les parties interne 51 et externe 52, et un lamage 57, creusé dans la partie externe 50, du côté de la face 54, arrivant au même niveau et dans le prolongement de la face de ladite membrane du côté de ladite face 54.

L'empilement de couches multidiélectriques 19 est tel que le miroir qu'il constitue laisse passer une partie de la lumière les deux ondes et qu'il sorte ainsi vers l'extérieur deux faisceaux lumineux 64 et 65.

Le système comprend par ailleurs :

— une pièce 24 avantageusement réalisée en forme de lame mince et circulaire, dans le même matériau que celui utilisé pour les deux pièces 42 et 49 et ayant deux faces 27 et 28 ;

— deux éléments piézoélectriques, de préférence des céramiques piézoélectriques 58 et 59, en forme de couronnes, collées centrées sur les faces 27 et 28 de la pièce 24, la céramique 58 étant collée sur la face 27 et étant plus large que la céramique 59 collée, elle, sur la face 28 de ladite pièce 24.

Ladite pièce 24 est collée, par sa face 28, en son centre sur la face 55 de la pièce 50 et, à sa périphérie, sur la face 54 de ladite pièce 50, de sorte que la céramique 58, la plus large, soit située à l'extérieur de l'ensemble.

Le diamètre interne de la couronne de la céramique 59 est préférentiellement choisi très légèrement supérieur à celui de la face 55 de la pièce 49.

Le diamètre interne de la couronne de la céramique 58 est choisi aussi réduit que possible tout en étant assez large pour laisser passer les deux faisceaux lumineux 64 et 65 issus du gyrolaser.

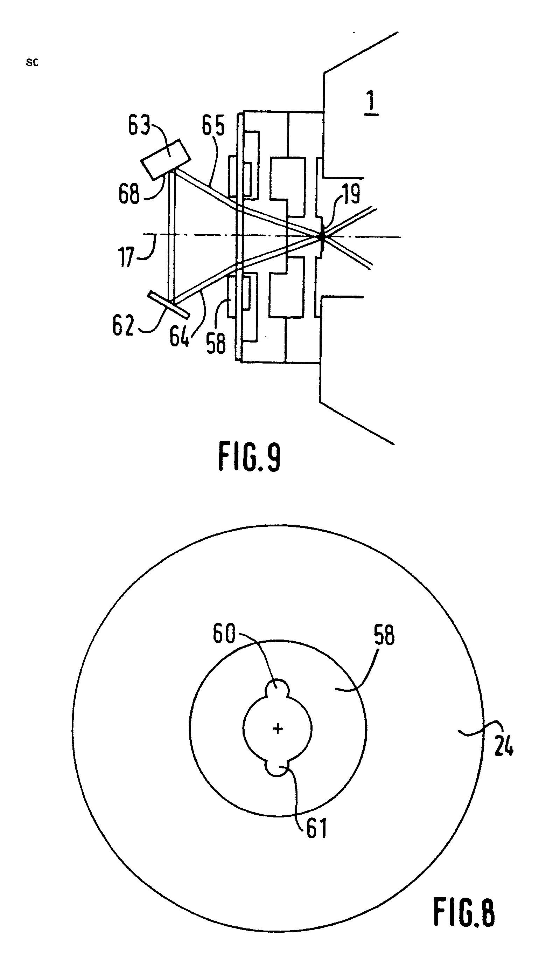

Dans le cas où il est souhaitable d'augmenter la sensibilité piézoélectrique, il est possible de réduire le diamètre interne de la céramique 58 à condition de ménager dans celle-ci, ainsi que le montre la figure 8, deux passages 60 et 61, par exemple sensiblement circulaires, séparés par une distance telle qu'elle corresponde à l'écartement des deux faisceaux 64 et 65 à leur sortie de la pièce 24.

Les modes de collage et de liaison électriques des céramiques 58 et 59 peuvent bien entendu être les mêmes que ceux décrits précédemment à l'aide des figures 4 et 5.

Ainsi décrit, le système de la figure 7 se comporte comme suit :

Du fait de l'élargissement de la partie interne 51, la membrane 52 est plus raide que la membrane 48 ou que les membranes 16 précédentes. Il faudra donc que les forces développées par le moteur piézoélectrique soient plus importantes, aussi bien pour la compensation thermique, que pour l'effet piézoélectrique lui-même. Le lamage 57 permet d'augmenter l'efficacité du moteur piézoélectrique du fait que le diamètre utile de la pièce 28 est lui-même augmenté et du fait que le diamètre des deux céramiques 58 et 59 peut alors être également augmenté.

La surface 54, bien que réduite, est largement suffisante pour un collage, alors que la surface 53 est conservée identique puisqu'elle est préférentiellement fixée à la surface 45 par adhérence moléculaire.

Le film de colle, non représenté, existant entre la pièce 28 et la face 55 de la pièce 49, est bien entendu transparent pour laisser passer les deux ondes lumineuses.

Le dimensionnement général, comme le montre la figure 7, est tel que les deux faisceaux lumineux qui ont traversé le miroir puissent traverser également la partie interne 43, la partie interne 51, la pièce 28 et sortir sans toucher les bords internes de la céramique 58.

La figure 9 illustre, à titre d'exemple, une méthode de mélange des deux faisceaux lumineux, préférentiellement utilisable pour faire la somme des intensités lumineuses desdits faisceaux. Une telle somme étant généralement utilisée comme signal utile pour réaliser un asservissement de la longueur de cavité.

Le montage comprend :

— un miroir 62 faisant un angle d'environ 30 degrés, dans le cas d'un gyrolaser triangulaire, avec l'axe 17 et placé de telle sorte qu'il intercepte et réfléchisse le faisceau lumineux 64 issu du gyrolaser ;

— une cellule photoélectrique 63 ayant une face de réception 68, placée de telle sorte qu'elle reçoive à la fois le deuxième faisceau 65 issu du gyrolaser et le faisceau 64 réfléchi par le miroir 62, lesdits faisceaux pouvant tomber sur ladite face de réception 66 au même endroit ou en deux endroits distincts.

Le miroir 62 et la cellule photoélectrique 63 peuvent être fixés par de nombreux moyens au miroir mobile piézoélectrique ou au bloc optique 1 directement. Ils peuvent également être fixés directement sur une platine ou dans un boîtier à l'intérieur duquel le gyrolaser serait lui-même fixé.

## Revendications

1. Miroir mobile piézoélectrique pour laser ou pour gyromètre à laser du type comprenant :

— un bloc optique (1) comportant au moins une cavité optique, à l'intérieur de laquelle sont engendrées, grâce à un milieu amplificateur, une ou plusieurs ondes laser ;

— au moins un miroir mobile actionné par un moteur piézoélectrique faisant intervenir un disque mince d'actionnement sur les deux faces opposées duquel sont fixés coaxialement deux éléments piézoélectriques de forme circulaire ;

caractérisé en ce que les susdits éléments piézoélectriques présentent la forme de couronne, et en ce que l'un des deux diamètres au moins de l'un desdits éléments piézoélectriques (25) est différent du diamètre correspondant de l'autre élément piézoélectrique, de manière à engendrer, sous l'effet d'une variation de température, une déformation du disque entraînant un déplacement du miroir mobile tendant à corriger les variations dimensionnelles de la cavité optique.

2. Miroir mobile piézoélectrique selon la revendication 1, caractérisé en ce que les susdits éléments piézoélectriques consistent en des céramiques piézoélectriques (25, 26).

3. Miroir mobile piézoélectrique selon la revendication 1, caractérisé en ce que le susdit disque mince est réalisé dans le même matériau que celui avec lequel sont réalisées les autres pièces dudit miroir mobile.

4. Miroir mobile piézoélectrique selon la revendication 1, caractérisé en ce que les éléments piézoélectriques sont des céramiques piézoélectriques (25 et 26) dont une est plus large que l'autre, la différence de cote étant telle que la déformation thermique de l'ensemble moteur piézoélectrique (24, 25, 26) compense au moins partiellement la dilatation du bloc (1), et en ce que le disque mince (24) est collé en son centre sur une partie mobile dudit miroir mobile et à sa périphérie sur une partie fixe du même miroir mobile.

5. Miroir mobile piézoélectrique selon l'une des revendications précédentes, caractérisé en ce que les céramiques (25 et 26) sont collées sur une grande surface par une colle à très bonne tenue mécanique et sur au moins une petite surface par une colle conductrice débordant légèrement vers l'extérieur de la surface de collage.

6. Miroir mobile piézoélectrique selon l'une des revendications précédentes, caractérisé en ce que l'une des céramiques piézoélectriques (25, 26) et, de préférence, la céramique (25), est remplacée par une céramique piézoélectrique (39) plus épaisse et éventuellement de même largeur que l'autre céramique piézoélectrique (26).

7. Miroir mobile piézoélectrique selon l'une des revendications précédentes, caractérisé en ce qu'il comprend une partie interne mobile, sensiblement de révolution autour d'un axe (17), agencée de telle sorte qu'elle comporte, à une extrémité, une face de faible diamètre, perpendiculaire audit axe (17), sur laquelle sont déposées des couches réfléchissantes formant miroir et, à l'autre extrémité, une face (55) sensiblement plus large et également perpendiculaire à l'axe (17), de sorte que des faisceaux lumineux (64 et 65) entrant au centre de la première face et faisant, avec l'axe (17), avant de pénétrer dans ladite partie interne mobile, un angle de trente degrés dans le cas des gyrolasers triangulaires et de quarante cinq degrés dans le cas des gyrolasers carrés, puissent ressortir par ladite face (55) plus large.

8. Miroir mobile piézoélectrique selon l'une des revendications précédentes, caractérisé en ce qu'il comporte une partie optique comprenant :
— une première pièce (41) sensiblement de révolution, qui comprend elle-même :
— une première partie extérieure (42) cylindrique dont une première face (44) est fixée au bloc optique (1) et dont une seconde face (45) est plane ;
— une première partie interne (43) également cylindrique dont une troisième face (47), sensiblement coplanaire de la première face (44), reçoit un empilement de couches multidiélectriques (19) formant miroir, et dont une quatrième face (46) est coplanaire de la seconde face (45) et également plane ;
— une membrane (48) reliant la première partie interne (43) et la première partie extérieure (42) ;
— une deuxième pièce (49) de révolution, qui comprend elle-même :
— une deuxième partie extérieure (50) cylindrique, ayant une cinquième face (53), sensiblement de même dimension que la seconde face (45) de la première pièce (41) et fixée à ladite seconde face (45), et une sixième face (54) moins large que la cinquième face (53) ;
— une deuxième partie interne (51), également cylindrique, de plus grand diamètre que celui de la première partie interne (43) de la première pièce (41), ayant une septième face (56) fixée à la quatrième face (46) de la première pièce (41), et une huitième face (55) coplanaire de la sixième face (54) ;
— une membrane (52) reliant la deuxième partie interne (51) et la deuxième partie extérieure (50), et un lamage (57), creusé dans la deuxième partie extérieure (50), du côté de la sixième face (54), arrivant au même niveau et dans le prolongement de la face de ladite membrane du côté de ladite sixième face (54) ;
— l'empilement de couches multidiélectriques (19), déposé sur la troisième face (47) étant tel que le miroir qu'il constitue laisse passer une partie de la lumière des deux ondes et qu'il sorte ainsi vers l'extérieur deux faisceaux lumineux (64 et 65).

9. Miroir mobile piézoélectrique selon la revendication 8, caractérisé en ce qu'il comporte en outre une partie moteur comprenant :
— un disque mince (24) réalisé dans le même matériau que celui utilisé pour les deux pièces (42 et 49) et avant deux faces (27 et 28) ;
— deux éléments piézoélectriques (58 et 59), en forme de couronnes, respectivement collées et centrées sur les deux faces opposées (27 et 28) du disque (24), la céramique (58) ayant une largeur différente de la céramique (59) afin de compenser les dilatations thermiques respectives du moteur piézoélectrique et du bloc, collée sur la face (28) de ladite pièce (24) ;
en ce que le disque mince (24) est collé, en son centre, sur la huitième face (55) de la deuxième pièce (49) et, à sa périphérie, sur la sixième face (54) de ladite deuxième pièce (49), et en ce que les diamètres internes des céramiques (58, 59) sont suffisamment larges pour laisser sortir les deux faisceaux lumineux (64 et 65) issus du gyrolaser.

10. Miroir mobile piézoélectrique selon l'une des revendications précédentes, caractérisé en ce que la céramique piézoélectrique (58), placée à l'extérieur, a un diamètre intérieur plus réduit que celui de la huitième face (55) de la deuxième pièce (49) et comporte deux passages (60 et 61), circulaires et écartés d'une distance correspondant sensiblement à l'écartement des faisceaux lumineux (64 et 65).

11. Miroir mobile piézoélectrique selon l'une des revendications précédentes, caractérisé en ce qu'il comporte un miroir (62) placé sur le trajet de l'un des susdits faisceaux lumineux (64, 65), de manière à réfléchir ce faisceau (64) vers une cellule photoélectrique (63) placée elle-même sur le trajet de l'autre faisceau (65).

**Patentansprüche**

1. Beweglicher piezoelektrischer Spiegel für eine Laservorrichtung oder einen Laserkreisel des Typs mit :

— einer optischen Einheit (1), die mindestens einen optischen Hohlraum aufweist, in dem durch ein Verstärkungsmedium eine oder mehrere Laserwellen erzeugt werden ;

— mindestens einem beweglichen Spiegel, der von einem piezoelektrischen Motor betägt wird, welcher eine dünne Betätigungsscheibe aufweist, auf deren beiden entgegengesetzten Oberflächen zwei piezolektrische kreisförmige Elemente koaxial befestigt sind, dadurch gekennzeichnet,

dass besagte piezoelektrische Elemente kronenförmig ausgebildet sind und dass mindestens einer der beiden Durchmesser eines der besagten piezoelektrischen Elemente (25) im Verhältnis zum entsprechenden Durchmesser des anderen piezoelektrischen Elementes verschieden ist, um, unter dem Einfluss einer Temperaturänderung, eine Verformung der Scheibe zu bewirken, die eine Verschiebung des beweglichen Spiegels zur Folge hat, um Dimensionsänderungen des optischen Hohlraumes zu korrigieren.

2. Beweglicher piezoelektrischer Spiegel nach Anspruch 1, dadurch gekennzeichnet, dass besagte piezoelektrische Elemente aus piezolektrischen Keramiken (25, 26) bestehen.

3. Beweglicher piezoelektrischer Spiegel nach Anspruch 1, dadurch gekennzeichnet, dass besagte dünne Scheibe aus dem gleichen Material gefertigt ist, aus dem die anderen Teile des besagten beweglichen Spiegels hergestellt sind.

4. Beweglicher piezoelektrischer Spiegel nach Anspruch 1, dadurch gekennzeichnet, dass die piezoelektrischen Elemente piezoelektrische Keramiken (25 und 26) sind, deren eine breiter ist als die andere und die Grössendifferenz so vorgesehen ist, dass die Wärmeverformung der piezoelektrischen Antriebseinheit (24, 25, 26) mindestens teilweise die Ausdehnung der Einheit (1) ausgleicht und dass besagte dünne Scheibe (24) im Mittelpunkt auf einen beweglichen Abschnitt des besagten beweglichen Spiegels geklebt ist und der Umfang auf einen nicht beweglichen Teil des besagten beweglichen Spiegels geklebt ist.

5. Beweglicher piezoelektrischer Spiegel nach einem der vorhergehenden Ansprüche, dadurch gekennzeichnet, dass eine grosse Fläche der Keramiken (25 und 26) mittels eines Klebstoffs befestigt ist, der eine sehr gute mechanische Widerstandsfähigkeit besitzt, und mindestens eine kleine Fläche mittels eines leitenden Klebstoffs, der leicht über die Klebefläche hinaustritt.

6. Beweglicher piezoelektrischer Spiegel nach einem der vorhergehenden Ansprüche, dadurch gekennzeichnet, dass eine der piezoelektrischen Keramiken (25, 26) und vorzugsweise die Keramik (25) durch eine dickere piezoelektrische Keramik (39) ersetzt wird, die eventuell die gleiche Breite hat, wie die andere piezoelektrische Keramik (26).

7. Beweglicher piezoelektrischer Spiegel nach einem der vorhergehenden Ansprüche, dadurch gekennzeichnet, dass er einen beweglichen, im wesentlichen um eine Achse (17) rotierenden inneren Abschnitt aufweist, der so angeordnet ist, dass er an einem Ende eine senkrecht zur besagten Achse (17) angeordnete Fläche geringen Durchmessers aufweist, auf die reflektierende, einen Spiegel bildende Schichten aufgebracht sind, und am anderen Ende eine wesentlich breitere und gleichfalls senkrecht zur Achse (17) angeordnete Fläche (55), sodass die Lichtstrahlenbündel (64 und 65) die ins Zentrum der ersten Fläche eintreten und mit der Achse (17), bevor sie in in den besagten beweglichen inneren Teil eintreten, bei Dreieckslaserkreiseln einen Winkel von 30° bilden und bei Viereckslaserkreiseln einen Winkel von 45°, durch die besagte grössere Fläche (55) wieder austreten können.

8. Beweglicher piezoelektrischer Spiegel nach einem der vorhergehenden Ansprüche, dadurch gekennzeichnet, dass er einen optischen Teil aufweist mit :

einem ersten Teil (41), das im wesentlichen ein Drehteil ist und seinerseits aufweist :

— einen ersten äusseren zylindrischen Abschnitt (42), dessen erste Fläche (44) auf der optischen Einheit (1) befestigt ist und dessen zweite Fläche (45) eben ist ;

— einen ersten inneren, ebenfalls zylindrischen Abschnitt (43), auf dessen sogenannter dritter, mit der ersten Fläche (44) im wesentlichen koplanarer Fläche (47) multidielektrische Schichten (19), die einen Spiegel bilden, übereinander angebracht sind und dessen sogenannte vierte Fläche (46) zur zweiten Fläche (45) koplanar und wie diese eben ist ;

— eine Membran (48), welche den ersten inneren Abschnitt (43) mit dem ersten äusseren Abschnitt (42) verbindet ;

einem zweiten Drehteil (49), das seinerseits aufweist :

— einen zweiten äusseren zylindrischen Abschnitt (50), mit einer sogenannten fünften Fläche (53), die etwa die gleiche Grösse hat wie die zweite Fläche (45) des ersten Teils (41) und an besagter zweiter Fläche (45) befestigt ist und einer sogenannten sechsten Fläche (54), die kleiner ist als die fünfte Fläche (53) ;

— einen zweiten inneren, ebenfalls zylindrischen Abschnitt (51), dessen Durchmesser grösser ist, als der des ersten inneren Abschnittes (43) des ersten Teils (41) und dessen sogenannte siebte Fläche (56) an der vierten Fläche (46) des ersten Teils (41) befestigt ist und dessen sogenannte achte Fläche (55) koplanar ist zur sechsten Fläche (54) ;

— eine Membran (56), welche den zweiten inneren Abschnitt (51) mit dem zweiten äusseren Abschnitt (50) verbindet und eine, im zweiten äusseren Abschnitt (50) auf der Seite der sechsten Fläche (54) angebrachte Senkung (57), die in gleicher Höhe wie die Fläche der besagten Membran und in deren Verlängerung auf der Seite der besagten sechsten Fläche (54) mündet, wobei die auf die dritte Fläche (47) aufgebrachten multidielektrischen Schichten (19) so ausgelegt sind, dass der Spiegel, den sie bilden, einen Teil des Lichtes der beiden Wellen durchlässt und so zwei Lichtstrahlenbündel (64 und 65) nach aussen austreten.

9. Beweglicher piezoelektrischer Spiegel nach Anspruch 8, dadurch gekennzeichnet, dass er ausserdem einen Antriebsteil aufweist, mit :

— einer dünnen Scheibe (24), die aus dem gleichen Material gefertigt ist, wie das der beiden Teile (42 und 49) und die zwei Flächen (27 und 28) aufweist ;

— zwei piezoelektrischen kronenförmigen Elementen (58 und 59), die jeweils auf die beiden entgegengesetzten Flächen ((27 und 28) der Scheibe (24) geklebt und ausgerichtet sind, wobei die Keramiken (58) und (59) verschieden breit sind, um die entsprechenden Wärmeausdehnungen des piezoelektrischen Motors und der Einheit auszugleichen, und die Keramik (59) auf die Fläche (28) des besagten Teils (24) geklebt ist ;

dass das Zentrum der dünnen Scheibe (24) auf die achte Fläche (55) des zweiten Teils (49) geklebt ist und ihr Umfang auf die sechste Fläche (54) des besagten zweiten Teils (49), und dass die Innendurchmesser der Keramiken (58, 59) gross genug sind, um die aus dem Laserkreisel kommenden beiden Lichtstrahlenbündel (64 und 65) herauszulassen.

10. Beweglicher piezoelektrischer Spiegel nach einem der vorhergehenden Ansprüche, dadurch gekennzeichnet, dass die aussen angebrachte piezoelektrische Keramik (58) einen geringeren Innendurchmesser besitzt, als die achte Fläche (55) des zweiten Teils (49) und zwei kreisförmige Durchlässe (60 und 61) aufweist, deren Entfernung voneinander im wesentlichen der Entfernung zwischen den Lichtstrahlenbündeln (64 und 65) entspricht.

11. Beweglicher piezoelektrischer Spiegel nach einem der vorhergehenden Ansprüche, dadurch gekennzeichnet, dass er einen Spiegel (62) aufweist, der in der Bahn eines der besagten Lichtstrahlenbündel so angeordnet ist, dass er besagtes Lichtstrahlenbündel (64) auf eine Photozelle (63) zurückwirft, die ihrerseits in der Bahn des anderen Lichtstrahlenbündels (65) angeordnet ist.

## Claims

1. Mobile piezoelectric mirror for a laser or laser gyroscope of the type comprising :

— an optical block (1) having at least one optical cavity, inside which one or more laser waves are generated by means of an amplifying medium ;

— at least one mobile mirror actuated by a piezoelectric motor bringing into play a thin actuating disc on both opposite faces of which two circular shaped piezoelectric elements are fixed coaxially,

characterized in that said piezoelectric elements have the shape of a ring and in that one of the two diameters at least of one of said piezoelectric elements (25) is different from the corresponding diameter of the other piezoelectric element so as to generate, under the effect of a temperature variation, deformation of the disc causing displacement of the mobile mirror which tends to correct the dimensional variations of the optical cavity.

2. Mobile piezoelectric mirror according to claim 1, characterized in that said piezoelectric elements consist of piezoelectric ceramics (25, 26).

3. Mobile piezoelectric mirror according to claim 1, characterized in that said thin disc is made from the same material as that with which the other parts of said mobile mirror are made.

4. Mobile piezoelectric mirror according to claim 1, characterized in that the piezoelectric elements are piezoelectric ceramics (25 and 26) one of which is wider than the other, the difference of dimension being such that the thermal deformation of the piezoelectric motor assembly (24, 25, 26) compensates at least partially for expansion of the block (1) and in that the thin disc (24) is bonded at its centre to a mobile part of said mobile mirror and at its periphery to a fixed part of the same mobile mirror.

5. Mobile piezoelectric mirror according to one of the preceding claims, characterized in that the ceramics (25 and 26) are bonded over a large area by a bonding agent with very good mechanical strength and over at least one small area by a conducting bonding agent extending slightly outwardly of the bonding area.

6. Mobile piezoelectric mirror according to one of the preceding claims, characterized in that one of the piezoelectric ceramics (25, 26) and, preferably, the ceramic (25) is replaced by a piezoelectric ceramic (39) which is thicker and possibly has the same width as the other piezoelectric ceramic (26).

7. Mobile piezoelectric mirror according to one of the preceding claims, characterized in that it comprises a mobile internal part, substantially of revolution about an axis (17), adapted so that it comprises, at one end, a face of small diameter, perpendicular to said axis (17), on which are deposited reflecting layers forming a mirror and, at the other end, a substantially wider face (55) also perpendicular to the axis (17) so that light beams (64 and 65) entering at the centre of the first face and forming, with axis (17) before penetrating into said mobile internal part, an angle of thirty degrees in the case of triangular lasers and of forty-five degrees in the case of square lasers, may leave through said wider face (55).

8. Mobile piezoelectric mirror according to one of the preceding claims, characterized in that it includes an optical part comprising :

— a first piece (41) substantially of revolution which itself comprises :

• a first external cylindrical part (42) a first face (44) of which is fixed to the optical block (1) and a second face (45) of which is flat ;

• a first internal part (43) also cylindrical a third face (47) of which, substantially coplanar with the first face (44) receives a stack of multi-dielectric layers (19) forming a mirror, and the fourth face (46) of which is coplanar with the second face (45) and also flat ;

• a membrane (48) connecting the first internal part (43) and the first external part (42) together ;

— a second piece (49) of revolution which itself comprises :

• a second external cylindrical part (50) having a fifth face (53), substantially of the same dimension as the second face (45) of the first piece (41) and fixed to said second face (45) and a sixth face (54) narrower than the fifth face (53) ;

• a second internal part (51) also cylindrical, of a larger diameter than that of the first internal part (43) of the first piece (41), having a seventh face (56) fixed to the fourth face (46) of the first piece (41) and an eighth face (55) coplanar with the sixth face (54) ;

• a membrane (52) connecting together the second internal part (51) and the second external part (50) and a recess (57) formed in the second external part (50) on the same side as the sixth face (54), arriving at the same level and in the extension of the face of said membrane on the same side as said sixth face (54) ;

• a stack of multi-dielectric layers (19), deposited on the third face (47), being such that the mirror which it forms lets pass a part of the light of the two waves and such that two light beams (64 and 65) thus exit to the outside.

9. Mobile piezoelectric mirror according to claim 8, characterized in that it further comprises a motor part comprising :

— a thin disc (24) made from the same material as that used for the two pieces (42 and 49) and having two faces (27 and 28) ;

— two piezoelectric elements (58 and 59) in the form of rings, respectively bonded to and centred on the two opposite faces (27 and 28) of the disc (24), the ceramic (58) having a width different from the ceramic (59) so as to compensate for the respective thermal expansions of the piezoelectric motor and of the block bonded on the face (28) of said piece (24) ;

in that the thin disc (24) is bonded, at its centre, on the eighth face (5) of the second piece (49) and, at its periphery, on the sixth face (54) of said second piece (49), and in that the internal diameters of the ceramics (58, 59) are sufficiently wide to let the two light beams (64 and 65) from the gyrolaser exit.

10. Mobile piezoelectric mirror according to one of the preceding claims, characterized in that the piezoelectric ceramic (58), placed outside, has an inner diameter more reduced than that of the eighth face (55) of the second piece (49) and comprises two passages (60 and 61), circular and spaced apart by a distance corresponding substantially to the spacing of the light beams (64 and 65).

11. Mobile piezoelectric mirror according to one of the preceding claims, characterized in that it comprises a mirror (62) placed in the path of one of said light beams (64, 65) so as to reflect this beam (64) towards a photoelectric cell (63) itself placed in the path of the other beam (65).

FIG.1

FIG.2

FIG.3

FIG.4

FIG.5

**FIG.6**

**FIG.7**

SC

FIG.9

FIG.8